Europäisches Patentamt

European Patent Office

Office européen des brevets

(19)

(11) EP 1 376 182 A2

(12) EUROPEAN PATENT APPLICATION

(43) Date of publication:
02.01.2004 Bulletin 2004/01

(51) Int Cl.$^7$: G02B 6/44

(21) Application number: 03253359.8

(22) Date of filing: 29.05.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 29.05.2002 JP 2002155147

(71) Applicant: NEC Corporation
Minato-ku, Tokyo 108-8001 (JP)

(72) Inventor: Ishi, Satoshi, c/o NEC Corporation
Tokyo 108-8001 (JP)

(74) Representative: Abnett, Richard Charles
REDDIE & GROSE
16 Theobalds Road
London WC1X 8PL (GB)

(54) **Method of repairing optical submarine cable and repair cable used in the method**

(57) A method of repairing an optical transmission cable (1, 21) which is broken at a breakage point (5, 25), includes the steps of (a) preparing a spare cable (11, 12, 21-24) which includes a first area comprised of a bridge fiber (11a, 21a, 22a) and a second area comprised of at least one kind of fiber (3a, 3b), (b) fabricating a repair cable (15, 35) through the use of the even number of the spare cable (11, 12, 21-24) such that the repair cable has opposite end surfaces having the same fiber arrangement as that of exposed surfaces (1a, 1b, 21a, 21b) of the optical transmission cable and that first areas are spliced to each other and the second areas are spliced to each other in the repair cable, and (c) inserting the repair cable into the optical transmission cable at the breakage point.

FIG.7A

EP 1 376 182 A2

# FIG.7B

**Description**

## BACKGROUND OF THE INVENTION

### FIELD OF THE INVENTION

The invention relates to a method of repairing a broken optical transmission cable, and further to a repair cable used in the method.

### DESCRIPTION OF THE PRIOR ART

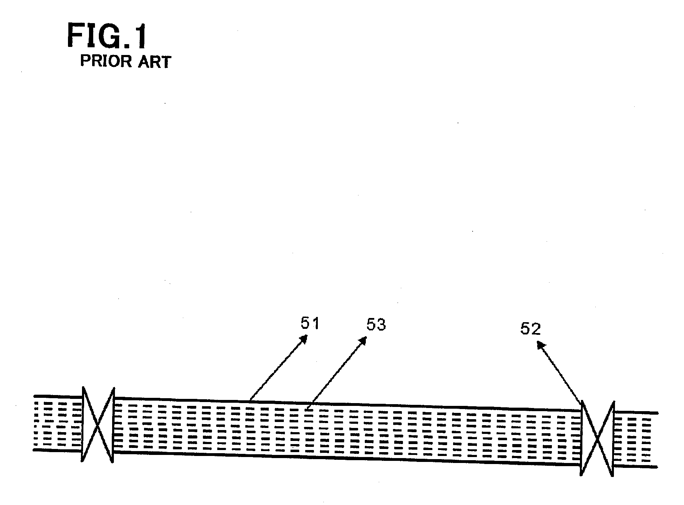

An optical transmission cable is recently often laid on the sea bottom as a cable for transmitting data therethrough. FIG. 1 is a conceptual view of a conventional system for transmitting data through an optical transmission cable.

The conventional optical submarine transmission system illustrated in FIG. 1 is comprised of a plurality of optical submarine repeaters 52, and optical cables 51 each optically connecting adjacent optical submarine repeaters 52 to each other.

The optical cable 51 in the conventional optical submarine transmission system illustrated in FIG. 1 is comprised of a single kind of fiber 53. Since the optical cable 51 is laid on the sea bottom, a fishing craft often hooks the optical cable 51 with a fishing net, and resultingly, damages the optical cable 51, in which case, the damaged optical cable 51 is pulled up onto a repair ship to be repaired.

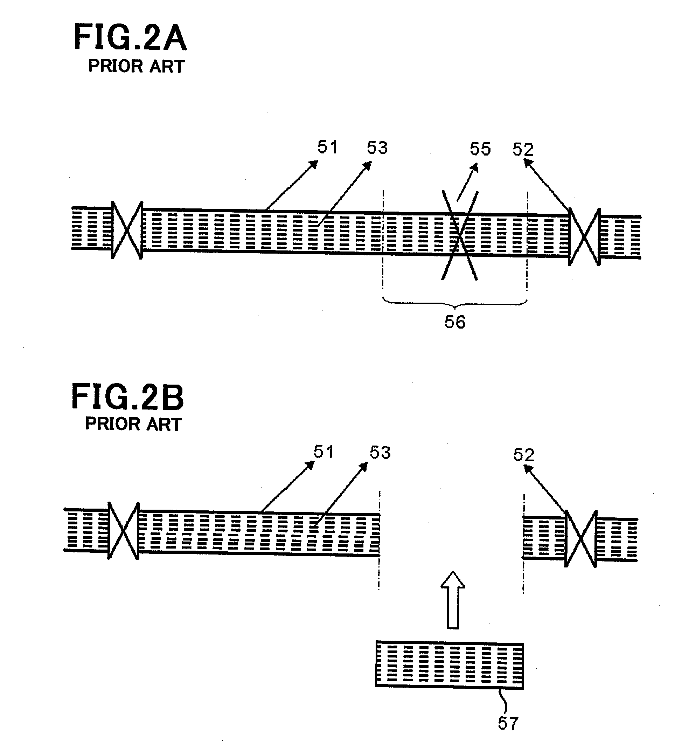

FIGS. 2A and 2B illustrate a conventional method of repairing the damaged optical cable 51.

It is assumed that the optical cable 51 is broken at a breakage point 55, as illustrated in FIG. 2A.

First, a repair area 56 including the breakage point 55 and having a predetermined length is determined, and then, a portion of the optical cable 51 corresponding to the repair area 56 is cut out. Then, a spare cable having the same fiber arrangement as that of the optical cable 51 is cut to make a repair cable 57 having a length equal to or slightly greater than the length of the repair area 56. Then, the repair cable 57 is inserted into the repair area 56, as illustrated in FIG. 2B. Thus, the optical cable 51 is repaired for the breakage.

Since the repair cable 57 to be inserted into the repair area 56 has the same fiber arrangement as that of the optical fiber 51, there are not caused such problems as mentioned later, specifically, an increase in splicing loss caused by splicing cables having different fiber arrangements from each other, and necessity of preparing a plurality of spare cables.

Recently, optical data transmission made through an optical transmission cable is made in wavelength division multiplexing (WDM) system. In wavelength division multiplexing (WDM) system, signals having different wavelengths from one another are multiplexed into a single optical fiber, and transmitted through the optical fiber.

With recent popularization of internet, there is necessity of transmitting and receiving a mass of signals in optical data transmission. As a result, the number of wavelengths to be multiplexed into a fiber was four (4) at the start of the wavelength division multiplexing system, and then, was increased to eight (8), sixteen (16), thirty two (32) and sixty four (64). The number is now being increased to a hundred (100) to two hundreds (200) or greater.

In addition, a bit rate per a wavelength was mainly 2.5 Gb/s, but a present bit rate per a wavelength is mainly 10 Gb/s. A bit rate per a wavelength is expected to be 40 Gb/s in the near future.

A channel spacing between adjacent optical signals was 125 GHz (1.0 nm) or wider, but is presently 100 GHz (0.8 nm) or 50 GHz (0.4 nm). A channel spacing between adjacent optical signals is expected to be about 25 GHz (0.2 nm) or narrower in near future.

As mentioned above, data to transmit or receive at a time in optical transmission has been remarkably increased in the past ten years.

In the wavelength division multiplexing (WDM) system, linearity is likely to be degraded in comparison with a single-wavelength transmission system. The degradation in linearity is caused mainly by self-phase modulation (SPM + GVD) wherein a waveform of a signal is deformed due to accumulated dispersion, and cross phase modulation (XPM) wherein a waveform of a signal is deformed due to interference between adjacent wavelengths.

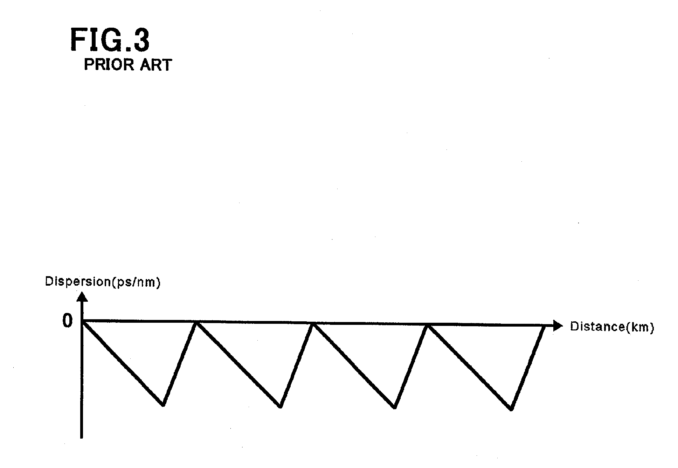

Thus, in accordance with a distance by which an optical signal is transmitted, a harmful influence is exerted on the optical signal by dispersion, that is, a waveform of the optical signal is deformed. In order to avoid the deformation of a waveform, the optical signal is generally designed to periodically reset the accumulated dispersion, as illustrated in FIG. 3 which is a map showing dispersion.

If dispersion in fiber or local dispersion is reset or reduced to zero for removing the accumulated dispersion, a relative speed between adjacent channels also becomes zero. This results in generation of cross phase modulation (XPM) and deformation of a wavelength of the optical signal, and accordingly, transmission performance is much lowered.

Accordingly, it is necessary in designing an optical fiber not to set the local dispersion zero, but to set the total dispersion zero.

Dispersion in fiber generally has inclination relative to a wavelength. Hence, the accumulated dispersion is periodically reset in about one channel. With respect to other channels, the total dispersion is reset in a terminal station.

Under the above-mentioned circumstance, the following fibers are presently used, for instance.

(A) Non-zero dispersion shifted fiber (NZ-DSF)

The non-zero dispersion shifted fiber has dispersion of about - 2 ps/nm/km in a wavelength of a transmitted signal to suppress degradation caused by cross phase modulation. The non-zero dispersion shifted fiber was used in a wavelength division multiplexing system, but was accompanied with a problem that the fiber had a small core diameter, and hence, was not suitable for much volume data transmission.

(B) Large core fiber (LCF)

The large core fiber is designed to have a greater core diameter than a core diameter of the above-mentioned non-zero dispersion shifted fiber in order to compensate for the shortcoming of the non-zero dispersion shifted fiber. The large core fiber can transmit data in a larger volume than the non-zero dispersion shifted fiber. However, the large core fiber is accompanied with a problem that the large core fiber is likely to be degraded due to self-phase modulation, because the large core fiber includes much accumulated dispersion.

(C) Large core fiber (LCF) + Low dispersion-slope fiber (LS)

This fiber has fiber having small dispersion slope, at a latter half of a span, in order to compensate for the shortcoming of the large core fiber. This fiber can suppress the accumulated dispersion as much as possible, and further suppress degradation caused by self-phase modulation. However, this fiber is accompanied with a problem that it is impossible to completely suppress the degradation caused by self-phase modulation, because the accumulated dispersion is reset in a relatively long period.

(D) Dispersion management fiber (DMF)

The dispersion management fiber is comprised of a combination of two fibers having dispersion polarity different from each other, in a span. In the dispersion management fiber, the dispersion is frequently reset.

As mentioned above, in order to solve the problems of deformation of a waveform and degradation in transmission performance in the wavelength division multiplexing system, it is necessary to reset the accumulated dispersion to zero by using the fiber having a dispersion value which is not zero. To this end, it would be necessary to use a hybrid cable comprised of a plurality of kinds of fibers in place of the single kind fiber 53 illustrated in FIG. 1, in a span between the adjacent optical submarine repeaters 52.

When a hybrid cable is to be repaired, if a repair cable to be inserted into the hybrid cable at a breakage point has different fiber arrangement from the hybrid cable, splicing loss would be increased with the result of a problem of degradation in transmission performance.

Hereinbelow is explained the problem with reference to an example case.

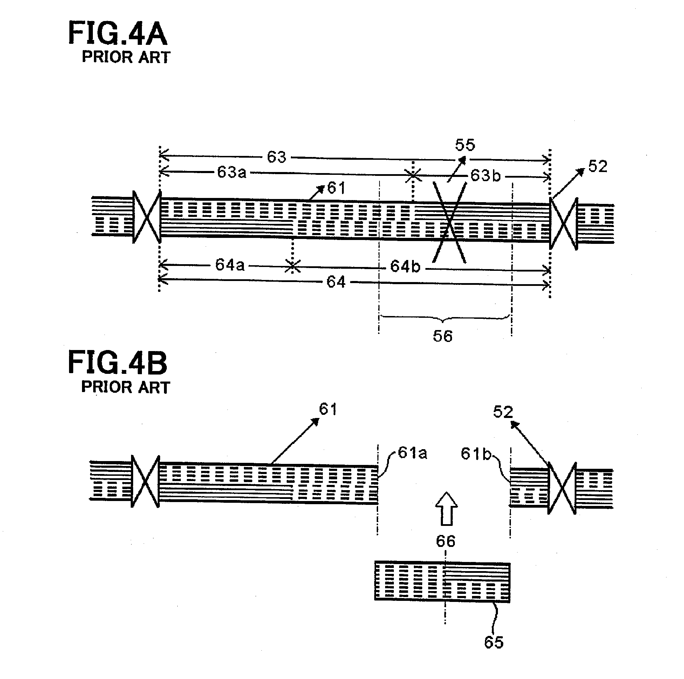

FIG. 4A is a conceptual view of a system for optically transmitting data, including an optical cable 61 comprised of a hybrid cable.

As illustrated in FIG. 4A, an optical cable 61 extending in a span between the adjacent optical submarine repeaters 52 is comprised of a first optical fiber 63 and a second optical fiber 64 overlapping each other. The first optical fiber 63 is comprised of a first fiber 63a and a second fiber 63b both extending in a length-wise direction of the optical fiber 61, and the second optical fiber 64 is comprised of a third fiber 64a and a fourth fiber 64b both extending in a length-wise direction of the optical fiber 61. The first fiber 63a in the first optical fiber 63 is the same as the fourth fiber 64b in the second optical fiber 64, and the second fiber 63b in the first optical fiber 63 is the same as the third fiber 64a in the second optical fiber 64.

The first fiber 63a in the first optical fiber 63 partially overlaps the fourth fiber 64b in the second optical fiber 64.

It is assumed herein that the optical cable 61 is broken at a point 55, as illustrated in FIG. 4A.

First, a repair area 56 including the breakage point 55 and having a predetermined length is determined, and then, a portion of the optical cable 61 corresponding to the repair area 56 is cut out. As illustrated in FIG. 4A, the repair area 56 extends across both the first fiber 63a of the first optical fiber 63 and the fourth fiber 64b of the second optical fiber 64 at a left end thereof, and further extends across the second fiber 63b of the first optical fiber 63 and the fourth fiber 64b of the second optical fiber 64 at a right end 61b thereof.

After removal of a portion corresponding to the repair area 56, the first fiber 63a of the first optical fiber 63 and the fourth fiber 64b of the second optical fiber 64 appear at an exposed left surface 61a of the optical cable 61, and the second fiber 63b of the first optical fiber 63 and the fourth fiber 64b of the second optical fiber 64 appear at an exposed right surface 61b of the optical cable 61.

In a conventional method of repairing the broken optical cable 61, a repair cable 65 having a length equal to or slightly greater than a length of the repair area 56 is first fabricated, and then, the repair cable 65 is inserted into the repair area 56, as illustrated in FIG. 4B. Thus, the optical cable 61 is repaired for the breakage 55.

The repair cable 65 is comprised at a left half thereof of the first fiber 63a of the first optical fiber 63 or the fourth fiber 64b of the second optical fiber 64 such that the repair cable 65 has the same fiber arrangement as that of the exposed left surface 61a of the optical cable 61, and at a right half thereof of the second fiber 63b of the first optical fiber 63 and the fourth fiber 64b of the second optical fiber 64 such that the repair cable 65 has the same fiber arrangement as that of the exposed right surface 61b of the optical cable 61. Accordingly, the repair cable 65 has the same fiber arrangement at its opposite ends as those of the optical cable 61, and hence, there are caused no problems caused by the connection between different fiber arrangements.

However, the first fiber 63a and the second fiber 63b are spliced directly to each other at a splicing plane 66 in the repair cable 65. That is, fibers having different fiber arrangements from each other are spliced at the splicing plane 66. As a result, the optical cable 61 into which the repair cable 65 was inserted is accompanied with a problem that splicing loss is increased at the splicing plane 66, and hence, data-transmission quality is deteriorated.

## SUMMARY OF THE INVENTION

In view of the above-mentioned problems in the conventional optical cable and the conventional method of repairing a broken optical cable, it is an object of the present invention to provide a method of repairing an optical cable comprised of a hybrid cable, without an increase in splicing loss caused by splicing cables having different fiber arrangements to each other, and degradation in data-transmission quality.

In another aspect of the present invention, there is provided a method of repairing an optical transmission cable which is broken at a breakage point, comprising the steps of preparing at least one kind of a first cable which includes a first area comprised of a bridge fiber and a second area comprised of at least one kind of fiber such that the first and second areas are arranged in a length-wise direction of each of the first cable, (b) fabricating a second cable through the use of the even number of the first cable such that the second cable has opposite end surfaces having the same fiber arrangement as that of exposed surfaces of the optical transmission cable which are caused by a breakage of the optical transmission cable and that the first areas in the first cables are spliced to each other and the second areas in the first cables are spliced to each other in the second cable, and (c) inserting the second cable into the optical transmission cable at the breakage point such that the broken optical transmission cable is spliced to each other through the second cable.

The advantages obtained by the aforementioned present invention will be described hereinbelow.

The first advantage is that splicing loss can be minimized, and hence, optical SNR (signal to noise ratio) is prevented from being degraded, and gain flatness can be maintained.

In accordance with the present invention, the repair cable is designed to have opposite surfaces having the same fiber arrangements as fiber arrangements of exposed surfaces of the optical transmission cable from which a portion corresponding to a repair area has been removed. Accordingly, the repair cable and the optical transmission cable are spliced to each other through the common fiber arrangement. Hence, it is possible to repair an optical transmission cable without an increase in splicing loss caused by slicing fibers to each other through different fiber arrangements, and degradation in quality in transmission performance.

Specifically, whereas splicing loss in the conventional method of repairing an optical transmission cable was about 1 dB, splicing loss in the method in accordance with the present invention is about 0.3 dB. That is, the present invention can reduce splicing loss by about 10% in comparison with the conventional method.

The second advantage is that cost reduction can be accomplished because the number of specific spare cables to be prepared in advance is minimized.

For instance, an optical transmission cable can be repaired through the use of two spare cables in the method in accordance with the present invention. In addition, an optical transmission cable can be repaired in a longer range by using four or more spare cables. That is, the number of spare cables is determined in accordance with a length of an optical transmission cable to be repaired, ensuring that it is not necessary to prepare spare cables in the number more than necessary.

The third advantage is that the repair cable is designed to have a necessary length, ensuring that there is no much difference in wavelength dispersion. Thus, it is possible to prevent degradation in transmission performance.

## BRIEF DESCRIPTION OF THE DRAWINGS

FIG. 1 is a conceptual view of a conventional system for transmitting data through an optical transmission cable.
FIG. 2A is a conceptual view of a step of determining a repair area in a damaged optical cable, in a conventional method of repairing a damaged optical cable.
FIG. 2B is a conceptual view of a step of inserting a repair cable into a damaged optical cable, in a conventional method of repairing a damaged optical cable.
FIG. 3 is a map showing dispersion which generates in optical signal transmission.
FIG. 4A is a conceptual view of a step of determining a repair area in a damaged optical cable, in another conventional method of repairing a damaged optical cable.
FIG. 4B is a conceptual view of a step of inserting a repair cable into a damaged optical cable, in another conventional method of repairing a damaged optical cable.

FIG. 5 is a conceptual view of a system for transmitting data through an optical transmission cable which is to be repaired by the method in accordance with the first embodiment of the present invention.

FIG. 6 is a conceptual view of a breakage in an optical transmission cable which is to be repaired by the method in accordance with the first embodiment of the present invention.

FIG. 7A is a conceptual view of a step of determining a repair area in a damaged optical transmission cable, in the method in accordance with the first embodiment of the present invention.

FIG. 7B is a conceptual view of a step of inserting a repair cable into a damaged optical transmission cable, in the method in accordance with the first embodiment of the present invention.

FIG. 8A is a cross-sectional view of a spare cable used in the method in accordance with the first embodiment of the present invention.

FIG. 8B is a cross-sectional view of a spare cable used in the method in accordance with the first embodiment of the present invention.

FIG. 8C is a cross-sectional view of a cable fabricated from the spare cables illustrated in FIGs. 8A and 8B.

FIG. 9A is a level diagram showing optical power of a signal transmitted through an optical transmission cable before the optical transmission cable is broken.

FIG. 9B is a level diagram showing optical power of a signal transmitted through an optical transmission cable after the optical transmission cable has been repaired by a conventional method.

FIG. 10 is a level diagram showing optical power of a signal transmitted through an optical transmission cable after the optical transmission cable has been repaired by the method in accordance with the first embodiment of the present invention.

FIGS. 11A to 11G are conceptual views illustrating respective steps of a method of repairing an optical transmission cable.

FIG. 12A is a conceptual view of a step of determining a repair area in a damaged optical transmission cable, in the method in accordance with the second embodiment of the present invention.

FIG. 12B is a conceptual view of a step of inserting a repair cable into a damaged optical transmission cable, in the method in accordance with the second embodiment of the present invention.

FIGS. 13A to 13D are cross-sectional views of a spare cable used in the method in accordance with the second embodiment of the present invention.

FIG. 13E is a cross-sectional view of a cable fabricated from the spare cables illustrated in FIGS. 13A to 13D.

FIGs. 14A and 14B show relation between a gain and a frequency of an optical signal.

## DESCRIPTION OF THE PREFERRED EMBODIMENTS

**First Embodiment.**

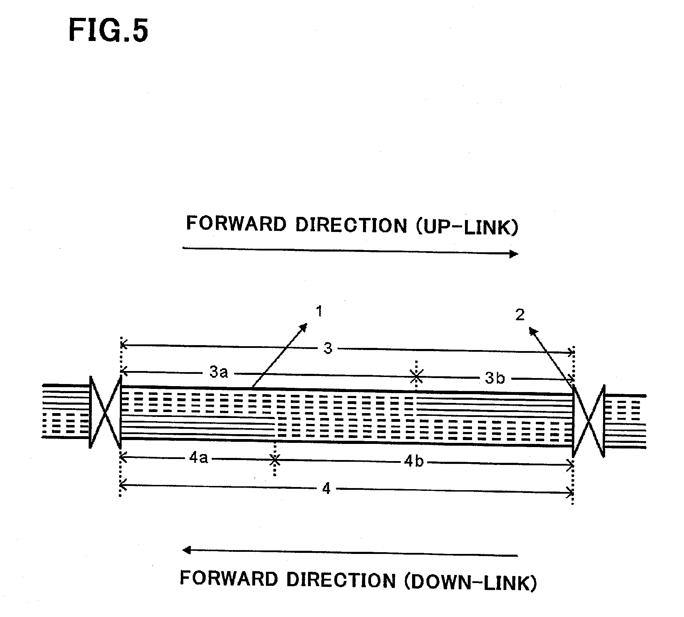

A method of repairing an optical transmission cable, in accordance with the first embodiment of the present invention is explained hereinbelow with reference to FIGS. 5 to 10. In the first embodiment, an optical transmission cable is used as an optical submarine cable.

FIG. 5 illustrates a system for transmission of data through an optical submarine cable 1 which is to be repaired by the method in accordance with the first embodiment. The optical submarine cable 1 optically connects adjacent optical submarine repeaters 2 to each other. The optical submarine cable 1 is comprised of four fiber pairs.

The optical submarine cable 1 is comprised of a first optical fiber 3 and a second optical fiber 4 overlapping each other. The first optical fiber 3 is comprised of a first fiber 3a and a second fiber 3b both extending in a length-wise direction of the optical submarine cable 1, and the second optical fiber 4 is comprised of a third fiber 4a and a fourth fiber 4b both extending in a length-wise direction of the optical submarine cable 1. The first fiber 3a in the first optical fiber 3 is the same as the fourth fiber 4b in the second optical fiber 4, and the second fiber 3b in the first optical fiber 3 is the same as the third fiber 4a in the second optical fiber 4.

The first fiber 3a in the first optical fiber 3 partially overlaps the fourth fiber 4b in the second optical fiber 4.

As illustrated in FIG. 5, in the one-span optical submarine cable 1, a direction towards the second fiber 3b from the first fiber 3a in the first optical fiber 3 is a forward direction in up-link, and a direction towards the fourth fiber 4b from the third fiber 4a in the second optical fiber 4 is a forward direction in down-link.

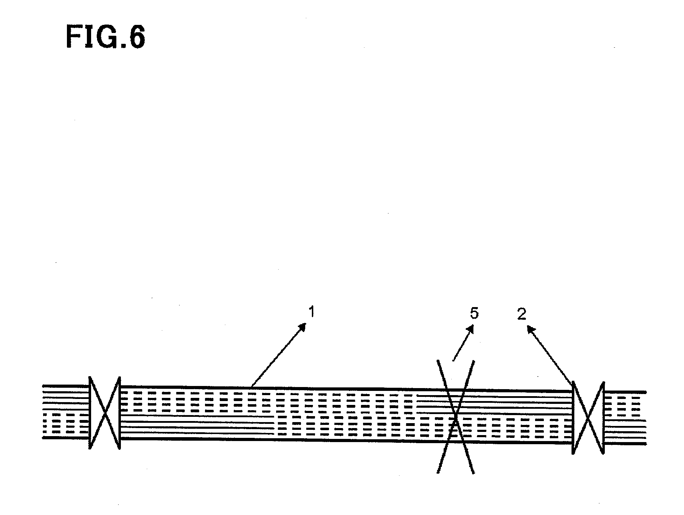

It is assumed herein that the optical submarine cable 1 is broken at a point 5, as illustrated in FIG. 6.

The method of repairing an optical submarine cable, in accordance with the first embodiment of the present invention is reduced into practice as follows.

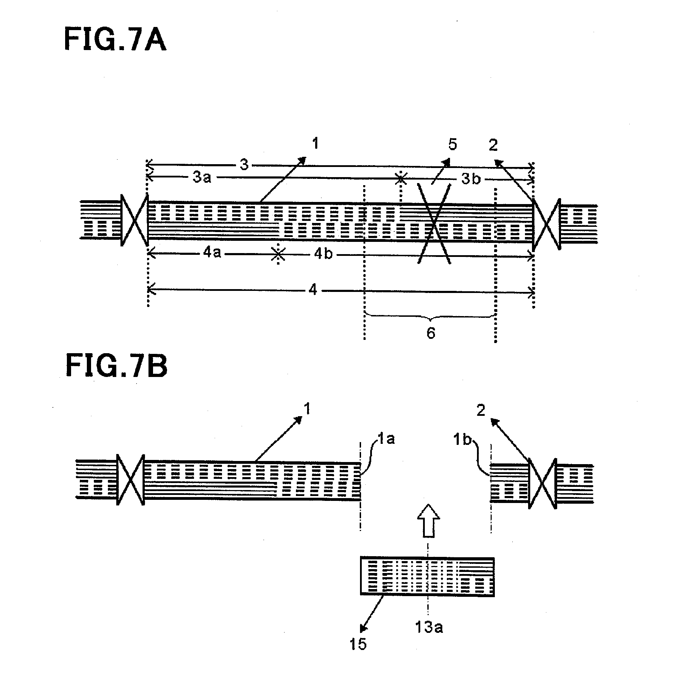

First, a repair area 6 including the breakage point 5 therein and having a predetermined length is determined, as illustrated in FIG. 7A. The repair area 6 extends across both the first fiber 3a of the first optical fiber 3 and the fourth fiber 4b of the second optical fiber 4 at a left end thereof, and further extends across the second fiber 3b of the first optical fiber 3 and the fourth fiber 4b of the second optical fiber 4 at a right end thereof.

Then, a portion of the optical submarine cable 1 corresponding to the repair area 6 is cut out, as illustrated in FIG. 7B.

After removal of the portion of the optical submarine cable 1 corresponding to the repair area 6, the first fiber 3a of the first optical fiber 3 and the fourth fiber 4b of the second optical fiber 4 appear at a left exposed surface 1a of the optical submarine cable 1, and the second fiber 3b of the first optical fiber 3 and the fourth fiber 4b of the second optical fiber 4 appear at a right exposed surface 1b of the optical submarine cable 1.

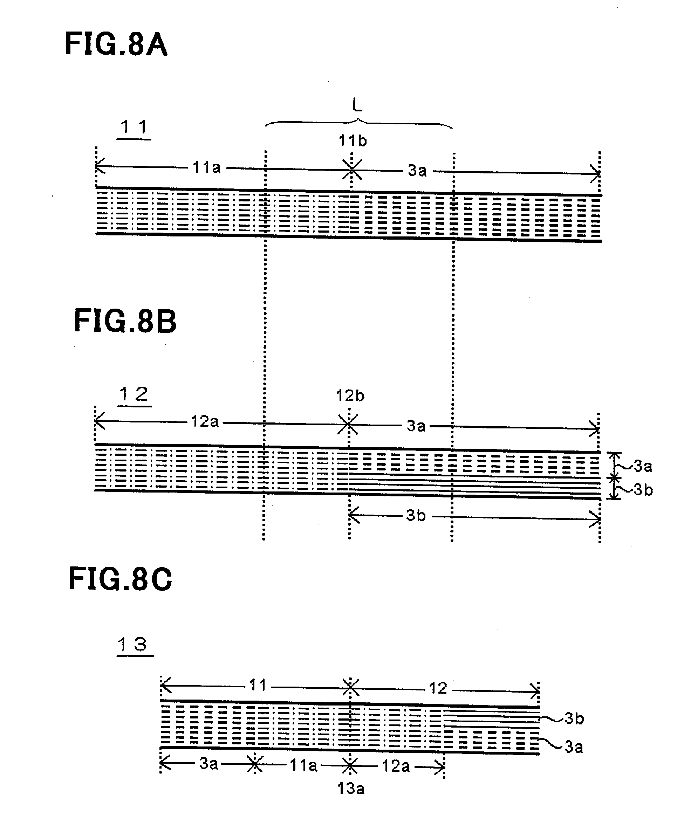

FIG. 8A is a cross-sectional view of a first spare cable 11 used in the method in accordance with the first embodiment, and FIG. 8B is a cross-sectional view of a second spare cable 12 used in the method in accordance with the first embodiment.

The first spare cable 11 illustrated in FIG. 8A is designed to include a first area comprised of a bridge fiber 11a, and a second area comprised of eight first fibers 3a. The first and second areas are sliced to each other through a splicing plane 11b.

The second spare cable 12 illustrated in FIG. 8B is designed to include a first area comprised of a bridge fiber 12a, and a second area comprised of four first fibers 3a and four second fibers 3b. The first and second areas are sliced to each other through a splicing plane 12b.

Thus, the second area of the first spare cable 11 has the same fiber arrangement as that of either the first fiber 3a in the first optical fiber 3 or the fourth fiber 4b in the second optical fiber 4, and the second area of the second spare cable 12 has the same fiber arrangement as a combination of a fiber arrangement of the second fiber 3b in the first optical fiber 3 and a fiber arrangement of the fourth fiber 4b in the second optical fiber 4.

The bridge fiber 11a in the first spare cable 11 has a core diameter equal to a core diameter of the first fiber 3a.

The bridge fiber 12a in the second spare cable 12 has a core diameter intermediate between core diameters of the first fiber 3a and the second fiber 3b.

Specifically, assuming that the bridge fiber 11a has a core diameter D11a the bridge fiber 12a has a core diameter D12a, the first fiber has a core diameter D3a, and the second fiber 3b has a core diameter D3b greater than the core diameter D3a, the following relation is established.

$$D11a = D3a$$

$$D3a < D12a < D3b$$

If the second area in the second spare cable 12 is comprised of three or more fibers, the bridge fiber 12a is designed to have a core diameter smaller than a maximum core diameter among core diameters of the fibers, and greater than a minimum core diameter among core diameters of the fibers.

That is, a core diameter of the bridge fiber 12a is defined as follows.

$$Dmin<D12a<Dmax$$

Dmin indicates a minimum core diameter among core diameters of the fibers, and Dmax indicates a maximum core diameter among core diameters of the fibers.

The bridge fiber 11a and the first fiber 3a in the first spare cable 11 are spliced to each other through different fiber arrangements, and the bridge fiber 12a and the first and second fibers 3a and 3b in the second spare cable 12 are spliced to each other through different fiber arrangements, resulting in splicing loss to some degree. However, since the bridge fibers 11a and 12a can be fabricated on the land, for instance, in a factory, splicing loss could be relatively readily controlled. For instance, it would be possible to minimize the splicing loss by slicing the bridge fibers 11a and 12a to the first and second fibers 3a and 3b with the splicing loss being measured while they are being spliced to each other.

In addition, since the bridge fiber 12a in the second spare cable 12 is designed to have a core diameter gradually decreasing towards a core diameter of the first fiber 3a from a core diameter of the second fiber 3b, the bridge fiber 12a would cause small splicing loss.

A repair cable 15 to be inserted into the repair area 6 illustrated in FIG. 7B is fabricated as follows.

A portion is cut out of the first spare cable 11 such that the portion includes the splicing plane 11b and has a predetermined length L. Similarly, a portion is cut out of the second spare cable 12 such that the portion includes the splicing plane 12b and has a predetermined length L.

Then, as illustrated in FIG. 8C, the portion of the first spare cable 11 and the portion of the second spare cable 12 are spliced to each other through a splicing plane 13a into a cable 13 such that the bridge fiber 11a of the first spare cable 11 and the bridge fiber 12a of the second spare cable 12 are spliced to each other and that the first fiber 3a of the second spare cable 12 is located below the second fiber 3b of the second spare cable 12.

The thus fabricated cable 13 has at its left end surface the same fiber arrangement as that of the left exposed surface 1a of the optical submarine cable 1, and at its right end surface the same fiber arrangement as that of the right exposed surface 1b of the optical submarine cable 1.

Then, the cable 13 illustrated in FIG. 8C is cut into a length equal to or slightly greater than the length of the repair area 6. The cable 13 is cut out such that the first fiber 3a of the first optical fiber 3 or the fourth fiber 4b of the second optical fiber 4 is exposed at a left end surface of the repair cable 15, and the first fiber 3a of the first optical fiber 3 and the second fiber 3b of the first optical fiber 3 are exposed at a right end surface of the repair cable 15. Thus, there is fabricated the repair cable 15.

Then, as illustrated in FIG. 7B, the thus fabricated repair cable 15 is inserted into the repair area 6.

Hereinbelow is explained splicing loss in the optical submarine cable 1 caused when the optical submarine cable 1 is repaired in accordance with the above-mentioned method.

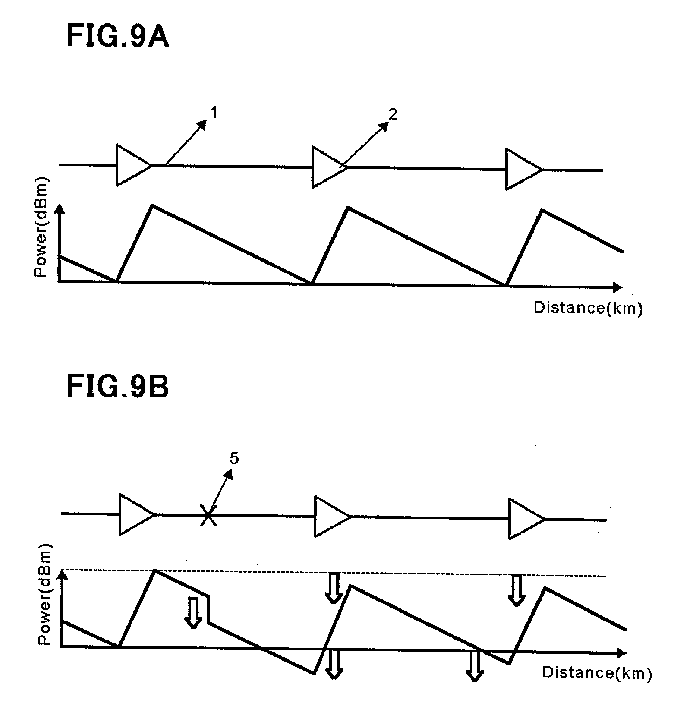

FIG. 9A is a level diagram showing optical power of a signal transmitted through an optical submarine cable before the optical submarine cable is broken, and FIG. 9B is a level diagram showing optical power of a signal transmitted through an optical submarine cable after the optical submarine cable has been repaired by a conventional method.

As shown in FIG. 9A, optical power of a transmitted signal is raised generally at the optical submarine repeater 2, and attenuates due to loss in the optical submarine cable 1 until the signal reaches the next optical submarine repeater 2. There is no remarkable loss in optical power.

When the optical submarine cable 1 has been repaired at the breakage point 5 in accordance with the conventional method, there is caused large loss due to different fiber arrangements being spliced to each other, as illustrated in FIG. 9B. As a result, a reduced optical power is input to the next optical submarine cable 1, and thus, the optical signal having the reduced power is input into the next submarine repeater 52. This causes reduction in an optical signal to noise ratio (SNR).

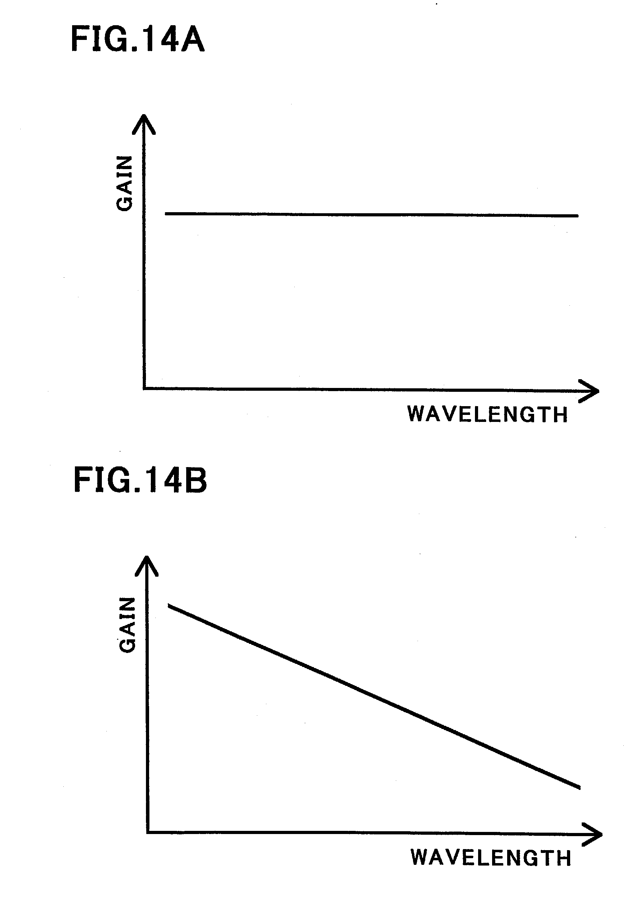

FIGs. 14A and 14B show relation between a gain and a wavelength of an optical signal.

If there is little or almost no loss in the optical submarine cable 1, a gain is kept at a constant relative to a wavelength of an optical signal, as illustrated in FIG. 14A. In other words, it is possible to have gain flatness.

However, if there is non-ignorable loss in the optical submarine cable 1, a gain is higher for a shorter wavelength, but lower for a longer wavelength, as illustrated in FIG. 14B. That is, a gain would have an inclination relative to a wavelength, and hence, it is no longer possible to have gain flatness. This causes degradation in transmission performance.

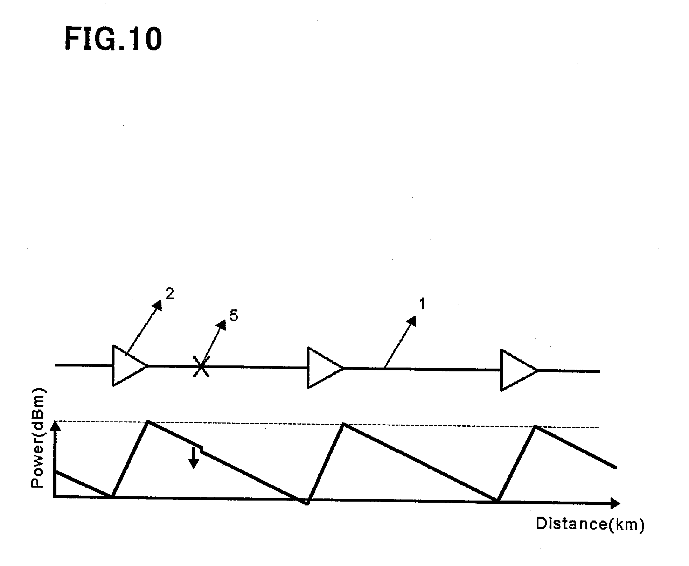

FIG. 10 is a level diagram showing optical power of a signal transmitted through the optical submarine cable 1 after the optical submarine cable 1 has been repaired by the method in accordance with the first embodiment.

As is obvious in view of FIG. 10, loss in optical power is quite small at the breakage point 5 of the optical submarine cable 1 which has been repaired by the method in accordance with the first embodiment. The method in accordance with the first embodiment makes it possible to minimize loss in optical power caused by splicing optical cables to each other, ensuring that an optical signal to noise ratio (SNR) can be minimized, and gain flatness can be maintained.

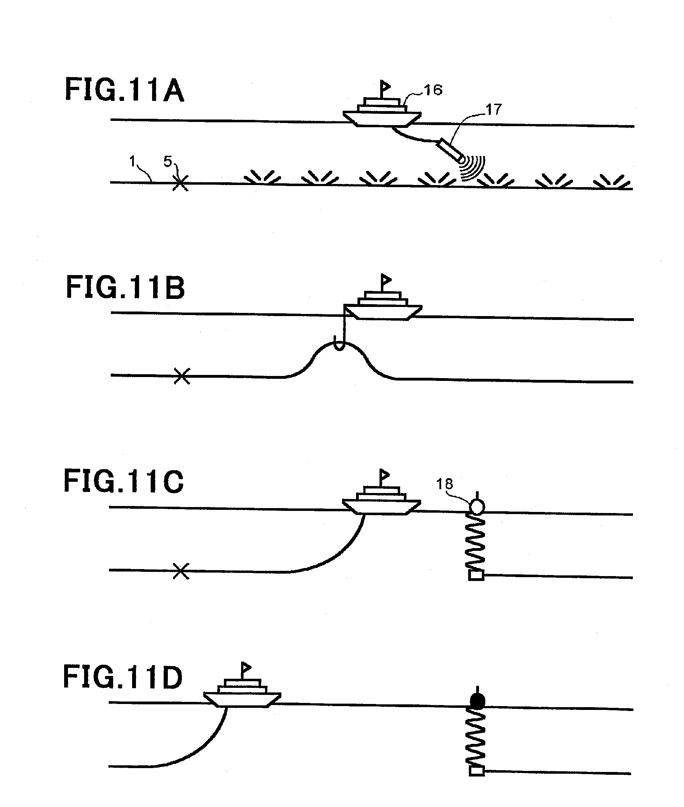

Hereinbelow are explained respective steps of repairing the optical submarine cable 1 by the above-mentioned method in accordance with the first embodiment, with reference to FIGS. 11A to 11G.

As illustrated in FIG. 11A, it is assumed that the optical submarine cable 1 is broken at a point 5, and a repair ship 16 monitors whether the optical submarine cable 1 is broken at any point, by means of a detector 17.

When the repair ship 16 detects the breakage point 5, as illustrated in FIG. 11B, the repair ship 16 pulls up the optical submarine cable 1 before reaching the breakage point 5.

Then, as illustrated in FIG. 11C, the repair ship 16 cuts the optical submarine cable 1 at a point where the optical submarine cable 1 is pulled up, and couples a sign buoy 18 to a half of the optical submarine cable 1 not including the breakage point 5 to allow the optical submarine cable 1 to flow on the sea level.

Then, as illustrated in FIG. 11D, the repair ship 16 pulls up the breakage point 5, and then, repairs the optical submarine cable 1 by the method in accordance with the above-mentioned first embodiment. A repaired portion of the optical submarine cable 1 is inserted into and covered with a protection box 19 to avoid corrosion, as illustrated in FIG. 11E.

After the optical submarine cable 1 has been repaired, as illustrated in FIG. 11E, the repair ship 16 goes towards the sign buoy 18, holding an end of the repaired optical submarine cable 1.

Then, as illustrated in FIG. 11F, the repaired optical submarine cable 1 is spliced to the optical submarine cable 1 to which the sign buoy 18 has been attached, by the method in accordance with the first embodiment.

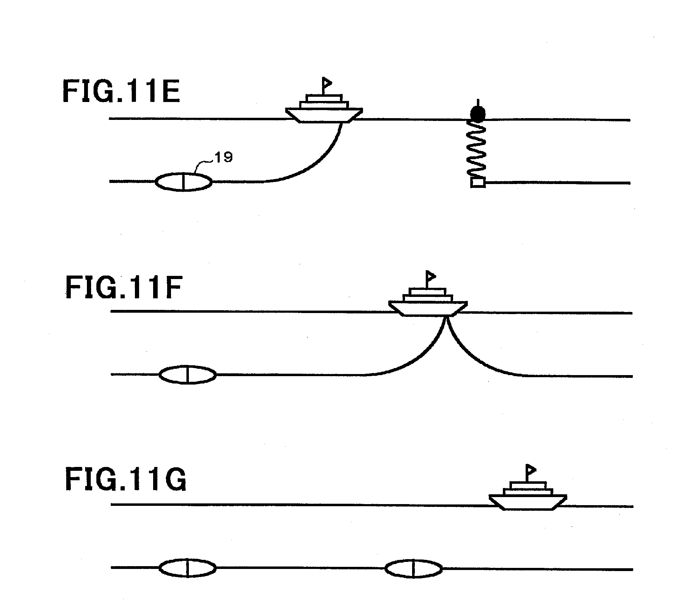

Thereafter, as illustrated in FIG. 11G, the optical submarine cable 1 is caused to sink to the sea bottom. Thus, the optical submarine cable 1 has been repaired at the breakage point 5 by the method in accordance with the first embodiment.

In the example having been explained with reference to FIGS. 11A to 11G, a minimum length of the repair cable 15 is set equal to 2L wherein L indicates a depth from the sea level at the breakage point 5.

Hereinbelow are explained examples of the first and second spare cables 11 and 12 used in the method in accordance with the first embodiment.

First Example

    Bridge fiber 11a of the first spare cable 11: Non-zero dispersion shifted fiber (NZ-DSF) or Dispersion shifted fiber (DSF)
    First fiber 3a: Large core fiber (LCF)
    Second fiber 3b: Low dispersion-slope fiber (LS)

Second Example

Bridge fiber 11a of the first spare cable 11: Low dispersion-slope fiber (LS) or Non-zero dispersion shifted fiber (NZ-DSF)
First fiber 3a: Single mode fiber (SMF)
Second fiber 3b: Dispersion compensation fiber (DCF)

Though the optical submarine cable is used as an optical submarine cable in the first embodiment, it should be noted that the method in accordance with the first embodiment may be applied to an optical cable lying on the land.

The above-mentioned method of repairing an optical submarine cable, in accordance with the first embodiment provides the following advantages.

The first advantage is that splicing loss can be minimized, and hence, optical SNR (signal to noise ratio) is prevented from being degraded, and gain flatness can be maintained.

In accordance with the first embodiment, the repair cable 15 is designed to have opposite surfaces having the same fiber arrangements as fiber arrangements of the exposed surfaces 1a and 1b of the optical submarine cable 1 from which a portion corresponding to the repair area 6 has been removed. Accordingly, the repair cable 15 and the optical submarine cable 1 are spliced to each other through the common fiber arrangement. Hence, it is possible to repair the optical submarine cable 1 without an increase in splicing loss caused by slicing fibers to each other through different fiber arrangements, and degradation in quality in transmission.

The second advantage is that cost reduction can be accomplished because the number of specific spare cables to be prepared in advance is minimized.

For instance, the optical submarine cable 1 can be repaired through the use of the two spare cables 11 and 12 in the method in accordance with the first embodiment, ensuring that it is not necessary to prepare spare cables in the number more than necessary.

The third advantage is that the repair cable 15 is designed to have a necessary length, ensuring that there is no much difference in wavelength dispersion. Thus, it is possible to prevent degradation in transmission performance.

**Second Embodiment**

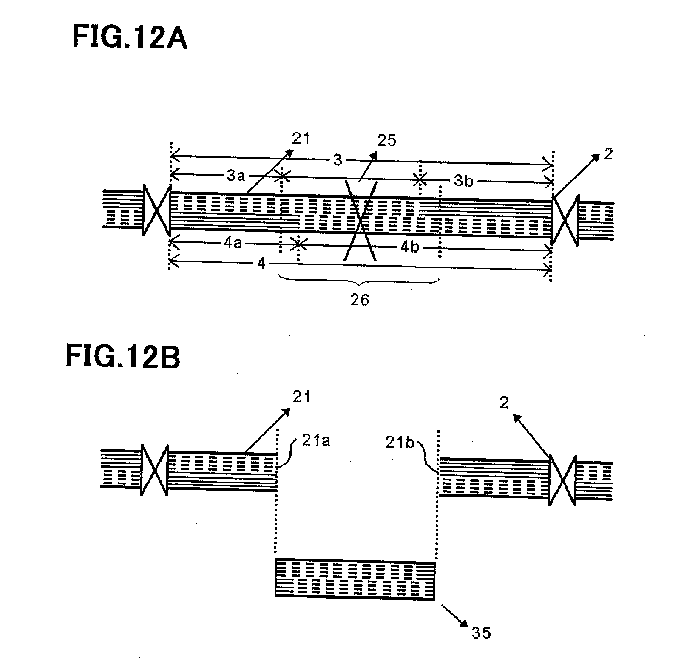

A method of repairing an optical submarine cable, in accordance with the second embodiment of the present invention is explained hereinbelow with reference to FIGs. 12A, 12B an 13A to 13E. In the second embodiment, an optical submarine cable is used as an optical submarine cable, similarly to the first embodiment.

An optical submarine cable 21 to be repaired by the method in accordance with the second embodiment, illustrated in FIG. 12A, has the same structure as the structure of the optical submarine cable 1 illustrated in FIG. 7A.

As illustrated in FIG. 12A, it is assumed that the optical submarine cable 21 is broken at a point 25.

The method of repairing an optical submarine cable, in accordance with the second embodiment is reduced into practice as follows.

First, a repair area 26 including the breakage point 25 therein and having a predetermined length is determined, as illustrated in FIG. 12A. The repair area 26 extends across both the first fiber 3a of the first optical fiber 3 and the third fiber 4a of the second optical fiber 4 at a left end thereof, and further extends across the second fiber 3b of the first optical fiber 3 and the fourth fiber 4b of the second optical fiber 4 at a right end thereof.

Then, a portion of the optical submarine cable 21 corresponding to the repair area 26 is cut out, as illustrated in FIG. 12B.

After removal of the portion of the optical submarine cable 21 corresponding to the repair area 26, the first fiber 3a of the first optical fiber 3 and the third fiber 4a of the second optical fiber 4 appear at a left exposed surface 21a of the optical submarine cable 21, and the second fiber 3b of the first optical fiber 3 and the fourth fiber 4b of the second optical fiber 4 appear at a right exposed surface 21b of the optical submarine cable 21.

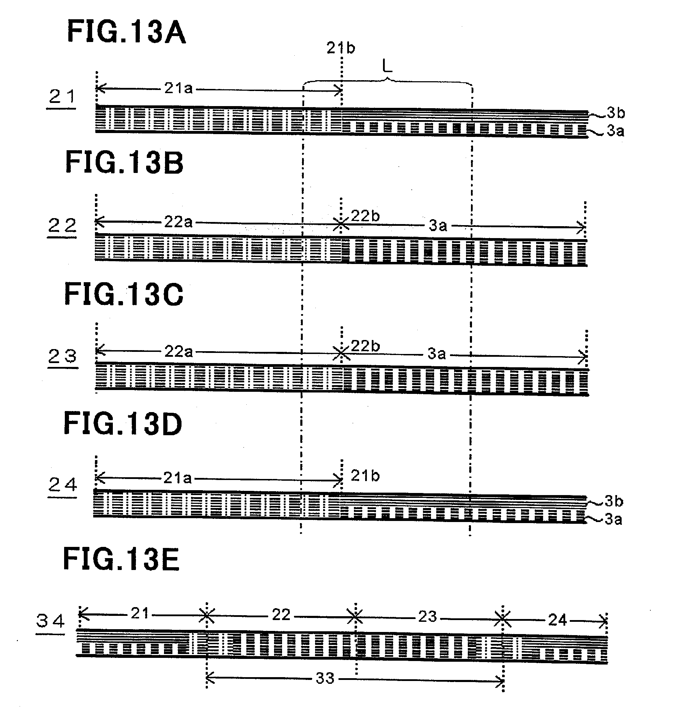

FIGs. 13A to 13D are cross-sectional views of first to fourth spare cables 21 to 24 used in the method in accordance with the second embodiment.

The first and fourth spare cables 21 and 24 illustrated in FIGs. 13A and 13D are designed to include a first area comprised of a bridge fiber 21a, and a second area comprised of four first fibers 3a and four second fibers 3b. The first and second areas are sliced to each other through a splicing plane 21b.

The second and third spare cables 22 and 23 illustrated in FIGs. 13B and 13C are designed to include a first area comprised of a bridge fiber 22a, and a second area comprised of eight first fibers 3a. The first and second areas are sliced to each other through a splicing plane 22b.

Thus, the second area of the first and fourth spare cables 21 and 24 has the same fiber arrangement as that of an area where the second fiber 3b of the first optical fiber 3 and the fourth fiber 4b of the second optical fiber 4 overlaps each other, and the second area of the second and third spare cables 22 and 23 has the same fiber arrangement as that of an area where the first fiber 3a of the first optical fiber 3 and the fourth fiber 4b of the second optical fiber 4 overlaps each other

The bridge fiber 22a in the second and third spare cables 22 and 23 has a core diameter equal to a core diameter of the first fiber 3a.

The bridge fiber 21a in the first and fourth spare cables 21 and 24 has a core diameter intermediate between core diameters of the first fiber 3a and the second fiber 3b.

Specifically, assuming that the bridge fiber 21a has a core diameter D21a, the bridge fiber 22a has a core diameter D22a, the first fiber has a core diameter D3a, and the second fiber 3b has a core diameter D3b greater than the core diameter D3a, the following relation is established.

$$D22a = D3a$$

$$D3a < D21a < D3b$$

If the second area in the first and fourth spare cables 21 and 24 is comprised of three or more fibers, the bridge fiber 22a is designed to have a core diameter smaller than a maximum core diameter among core diameters of the fibers, and greater than a minimum core diameter among core diameters of the fibers.

That is, a core diameter of the bridge fiber 22a is defined as follows.

$$Dmin < D22a < Dmax$$

Dmin indicates a minimum core diameter among core diameters of the fibers, and Dmax indicates a maximum core diameter among core diameters of the fibers.

The bridge fiber 21a and the first fiber 3a in the second and third spare cables 22 and 23 are spliced to each other through different fiber arrangements, and the bridge fiber 22a and the first and second fibers 3a and 3b in the second and third spare cables 22 and 23 are spliced to each other through different fiber arrangements, resulting in splicing loss to some degree. However, since the bridge fibers 21a and 22a can be fabricated on the land, for instance, in a factory, splicing loss could be relatively readily controlled. For instance, it would be possible to minimize the splicing loss by slicing the bridge fibers 21a and 22a to the first and second fibers 3a and 3b with the splicing loss being measured while they are being spliced to each other.

In addition, since the bridge fiber 22a in the second and third spare cables 22 and 23 is designed to have a core diameter gradually decreasing towards a core diameter of the first fiber 3a from a core diameter of the second fiber 3b, the bridge fiber 22a would cause small splicing loss.

A repair cable 35 to be inserted into the repair area 26 illustrated in FIG. 12A is fabricated as follows.

A portion is cut out of the first and fourth spare cables 21 and 24 such that the portion includes the splicing plane 21b and has a predetermined length L. Similarly, a portion is cut out of the second and third spare cables 22 and 23 such that the portion includes the splicing plane 22b and has a predetermined length L.

Then, as illustrated in FIG. 13E, the portion of the second spare cable 22 and the portion of the third spare cable 23 are spliced to each other into a cable 33 such that the second areas of them comprised of the first fiber 3a are spliced to each other. The thus fabricated cable 33 has opposite surfaces at which the bridge fiber 22a of the second spare cable 22 and the bridge fiber 22a of the third spare cable 23 are exposed.

Then, the portion of the first spare cable 21 having the length L and the second spare cable 22 of the cable 33 are spliced to each other such that the first areas of them comprised of the bridge fibers 21a and 22a are spliced to each other and that the first fiber 3a of the first spare cable 21 is located below the second fiber 3b of the first spare cable 21.

Similarly, the portion of the fourth spare cable 24 having the length L and the third spare cable 23 of the cable 33 are spliced to each other such that the first areas of them comprised of the bridge fibers 21a and 22a are spliced to each other.

Thus, there is fabricated such a cable 34 as illustrated in FIG. 13E.

Then, the cable 34 is cut into the repair cable 35 (see FIG. 12B) such that the first and second fibers 3a and 3b in this order from upward are exposed at a left end surface of the repair cable 35, and the second and first fibers 3b and 3a in this order from upward are exposed at a right end surface of the repair cable 35, and that the repair cable 35 has a length equal to a length of the repair area 26.

Then, as illustrated in FIG. 12B, the thus fabricated repair cable 35 is inserted into the repair area 26.

The optical submarine cable 1 is actually repaired in accordance with the method having been explained with reference to FIGs. 11A to 11G, similarly to the first embodiment.

The method in accordance with the second embodiment provides the same advantages as those provided by the method in accordance with the first embodiment.

Though the greater number of the spare cables are used in the method in accordance with the second embodiment than in the method in accordance with the first embodiment (specifically, the four spare cables 21, 22, 23 and 24 are used in the second embodiment whereas the two spare cables 11 and 12 are used in the first embodiment), it is possible in the second embodiment to set the repair area 26 having a greater length than a length of the repair area 6 in the first embodiment. For instance, if the optical submarine cable 1 is broken at a plurality of points within a certain length, those breakage points can be repaired at a time by the method in accordance with the second embodiment.

The two spare cables 11 and 12 are used in the first embodiment, and the four spare cables 21, 22, 23 and 24 are used in the second embodiment. However, the number of the spare cables used for fabricating a repair cable is not to be limited to two or four. There may be used N spare cables for fabricating a repair cable such as the repair cable 15 or 35 wherein N is an even integer equal to six or greater.

## Claims

1. A method of repairing an optical transmission cable (1, 21) which is broken at a breakage point (5, 25), comprising the steps of:

    (a) preparing at least one kind of a first cable (11, 12, 21-24) which includes a first area comprised of a bridge fiber (11a 21a, 22a) and a second area comprised of at least one kind of fiber (3a, 3b) such that the first and second areas are arranged in a length-wise direction of each of the first cable (11, 12, 21-24);
    (b) fabricating a second cable (15, 35) through the use of the even number of the first cable (11, 12, 21-24) such that the second cable (15, 35) has opposite end surfaces having the same fiber arrangement as that of exposed surfaces (1a, 1b, 21a, 21b) of the optical transmission cable (1, 21) which are caused by a breakage of the optical transmission cable (1, 21) and that the first areas in the first cables (11, 12, 21-24) are spliced to each other and the second areas in the first cables (11, 12, 21-24) are spliced to each other in the second cable (15, 35); and
    (c) inserting the second cable (15, 35) into the optical transmission cable (1, 21) at the breakage point (5, 25) such that the broken optical transmission cable (1, 21) is spliced to each other through the second cable (15, 35).

2. The method as set forth in claim 1, further comprising the step of (d) defining a repair area (6, 26) by cutting the optical transmission cable (1, 21) around the breakage point (5, 25) by a predetermined length, the step (d) being carried out prior to the step (b),

    wherein the second cable (15, 35) is fabricated in the step (b) such that the second cable (15, 35) has opposite end surfaces having the same fiber arrangement as that of exposed surfaces (1a, 1b, 21a, 21b) of the repair area (6, 26), and the second cable (15, 35) is inserted into the repair area (6, 26) in the step (c).

3. The method as set forth in claim 1 or 2, wherein the optical transmission cable (1, 21) is an optical submarine cable.

4. The method as set forth in claim 3, wherein the second cable (15, 35) has a length equal to or greater than 2L wherein L indicates a depth of the breakage point (5, 25) from a sea level.

5. A method of fabricating a second cable (15, 35) which is to be inserted into a breakage point (5, 25) of an optical transmission cable (1, 21) to repair the optical transmission cable (1, 21), comprising the steps of:

    (a) preparing the even number of first cables (11, 12, 21-24) each of which includes a first area comprised of a bridge fiber (11a, 21a, 22a) and a second area comprised of at least one kind of fiber (3a, 3b) such that the first and second areas are arranged in a length-wise direction of each of the first cables (11, 12, 21-24); and
    (b) forming the second cable (15, 35) such that the second cable (15, 35) has opposite end surfaces having the same fiber arrangement as that of exposed surfaces of the optical transmission cable (1, 21) which are caused by a breakage of the optical transmission cable (1, 21) and that the first areas in the first cables (11, 12, 21-24) are spliced to each other and the second areas in the first cables (11, 12, 21-24) are spliced to each other in the second cable (15, 35).

6. The method as set forth in claim 5, wherein the optical transmission cable (1, 21) is an optical submarine cable.

7. The method as set forth in claim 6, wherein the second cable (15, 35) has a length equal to or greater than 2L wherein L indicates a depth of the breakage point (5, 25) from a sea level.

8. A repair cable (15, 35) which is to be inserted into a breakage point (5, 25) of an optical transmission cable (1, 21) to repair the optical transmission cable (1, 21),

    the repair cable (15, 35) being comprised of the even number of spare cables (11, 12, 21-24) each of which includes a first area comprised of a bridge fiber (11a 21a, 22a) and a second area comprised of at least one kind of fiber (3a, 3b) such that the first and second areas are arranged in a length-wise direction of each of the spare cables (11, 12, 21-24),

    the repair cable (15, 35) having opposite end surfaces having the same fiber arrangement as that of exposed surfaces (1a, 1b, 21a, 21b) of the optical transmission cable (1, 21) which are caused by a breakage of the optical transmission cable (1, 21), and

    the repair cable (15, 35) having at least one are at which the bridge fiber (11a, 21a, 22a) of a spare cable (11, 12, 21-24) is spliced to the bridge fiber (11a, 21a, 22a) of another spare cable (11, 12, 21-24).

**9.** The repair cable (15, 35) as set forth in claim 8, wherein the second area is comprised of a single kind of fiber (3a or 3b), and the bridge fiber (11a 21a, 22a) has a core diameter equal to a core diameter of the fiber.

**10.** The repair cable (15, 35) as set forth in claim 8, wherein the second area is comprised of two or more kinds of fibers (3a, 3b), and the bridge fiber (11a 21a, 22a) has a core diameter smaller than a maximum core diameter among core diameters of the fibers, but greater than a minimum core diameter among core diameters of the fibers.

**11.** The repair cable (15, 35) as set forth in claim 8, 9 or 10, wherein the bridge fiber (11a 21a, 22a) is comprised of a non-zero dispersion shifted fiber (NZ-DSF) or a dispersion shifted fiber (DSF), and the second area is comprised of a large core fiber (LCF).

**12.** The repair cable (15, 35) as set forth in claim 8, 9 or 10, wherein the bridge fiber (11a, 21a, 22a) is comprised of a non-zero dispersion shifted fiber (NZ-DSF) or a dispersion shifted fiber (DSF), and the second area is comprised of a large core fiber (LCF) and a low dispersion-slope fiber (LS).

**13.** The repair cable (15, 35) as set forth in claim 8, 9 or 10, wherein the bridge fiber (11a 21a, 22a) is comprised of a low dispersion-slope fiber (LS) or a non-zero dispersion shifted fiber (NZ-DSF), and the second area is comprised of a single mode fiber (SMF).

**14.** The repair cable (15, 35) as set forth in claim 8, 9 or 10, wherein the bridge fiber (11a 21a, 22a) is comprised of a low dispersion-slope fiber (LS) or a non-zero dispersion shifted fiber (NZ-DSF), and the second area is comprised of a single mode fiber (SMF) and a dispersion compensation fiber (DCF).

**15.** The repair cable (15, 35) as set forth in claim 8, 9 or 10, wherein the repair cable (15, 35) is used for repairing an optical submarine cable (1, 21).

**16.** The repair cable (15, 35) as set forth in claim 15, wherein the repair cable (15, 35) has a length equal to or greater than 2L wherein L indicates a depth of the breakage point (5, 25) from a sea level.

**17.** A spare cable (11, 12, 21-24) used for fabricating a repair cable (15, 35) which is to be inserted into a breakage point (5, 25) of an optical transmission cable (1, 21) to repair the optical transmission cable (1, 21), the spare cable (11, 12, 21-24) including a first area comprised of a bridge fiber (11a 21a, 22a) and a second area comprised of at least one kind of fiber such that the first and second areas are arranged in a length-wise direction of the spare cable (11, 12, 21-24).

**18.** The spare cable (11, 12, 21-24) as set forth in claim 17, wherein the second area is comprised of a single kind of fiber (3a or 3b), and the bridge fiber (11a 21a, 22a) has a core diameter equal to a core diameter of the fiber.

**19.** The spare cable (11, 12, 21-24) as set forth in claim 17, wherein the second area is comprised of two or more kinds of fibers (3a, 3b), and the bridge fiber (11a 21a, 22a) has a core diameter smaller than a maximum core diameter among core diameters of the fibers, but greater than a minimum core diameter among core diameters of the fibers.

**20.** The spare cable (11, 12, 21-24) as set forth in claim 17, 18 or 19, wherein the bridge fiber (11a 21a, 22a) is comprised of a non-zero dispersion shifted fiber (NZ-DSF) or a dispersion shifted fiber (DSF), and the second area is comprised of a large core fiber (LCF).

**21.** The spare cable (11, 12, 21-24) as set forth in claim 17, 18 or 19, wherein the bridge fiber (11a 21a, 22a) is comprised of a non-zero dispersion shifted fiber (NZ-DSF) or a dispersion shifted fiber (DSF), and the second area is comprised of a large core fiber (LCF) and a low dispersion-slope fiber (LS).

**22.** The spare cable (11, 12, 21-24) as set forth in claim 17, 18 or 19, wherein the bridge fiber (11a 21a, 22a) is comprised of a low dispersion-slope fiber (LS) or a non-zero dispersion shifted fiber (NZ-DSF), and the second area is comprised of a single mode fiber (SMF).

**23.** The spare cable (11, 12, 21-24) as set forth in claim 17, 18 or 19, wherein the bridge fiber (11a 21a, 22a) is comprised of a low dispersion-slope fiber (LS) or a non-zero dispersion shifted fiber (NZ-DSF), and the second area is comprised of a single mode fiber (SMF) and a dispersion compensation fiber (DCF).

**24.** The spare cable (11, 12, 21-24) as set forth in claim 17, 18 or 19, wherein the repair cable (15, 35) is used for repairing an optical submarine cable (1, 21).

# FIG.1
## PRIOR ART

51  53  52

# FIG.2A
**PRIOR ART**

51  53  55  52

56

# FIG.2B
**PRIOR ART**

51  53  52

57

# FIG.3
PRIOR ART

EP 1 376 182 A2

FIG.4A
PRIOR ART

FIG.4B
PRIOR ART

16

# FIG.5

FORWARD DIRECTION (UP-LINK)

FORWARD DIRECTION (DOWN-LINK)

FIG.6

## FIG.7A

## FIG.7B

# FIG.8A

# FIG.8B

# FIG.8C

## FIG.9A

## FIG.9B

# FIG.10

FIG.11A

FIG.11B

FIG.11C

FIG.11D

FIG.11E

FIG.11F

FIG.11G

# FIG.12A

# FIG.12B

# FIG.13A

# FIG.13B

# FIG.13C

# FIG.13D

# FIG.13E

# FIG.14A

# FIG.14B